# EUROPEAN PATENT APPLICATION

(11) **EP 3 730 199 A1**
(43) Date of publication of application: **28.10.2020**
(21) Application number: 19171196.9
(22) Date of filing: 25.04.2019
(51) Int. Cl.: B01D 5/00, B01D 53/00

(54) **SYSTEM AND METHOD FOR REMOVAL OF GASEOUS CONTAMINANTS FROM LIQUID OR SUPERCRITICAL CARBON DIOXIDE**

(71) Applicant: Folium Biosciences Europe B.V., 1382 GS Weesp (NL)
(72) Inventor: de Vries, Tjerk Jan, 1382 GS WEESP (NL)
(74) Representative: van Essen, Peter Augustinus

(57) **Abstract**

There is provided a method for removal of gaseous contaminants from a carbon dioxide processing fluid, the gaseous contaminants comprising at least one air component, the method comprising:
- providing a processing system having a main volume and a condenser volume and bringing the main volume and condenser volume in fluid communication;
- maintaining in the main volume and the condenser volume the carbon dioxide processing fluid at a process pressure and a process temperature, the process pressure and process temperature corresponding to one selected from a liquid state and a supercritical state for carbon dioxide;
- cooling the carbon dioxide processing fluid in the condenser volume to a second temperature, wherein the second temperature is lower than the process temperature, resulting in a carbon dioxide enriched liquid portion and a gaseous portion enriched with the at least one air component in the condenser volume;
- venting the gaseous portion as a vented gas flow from the condenser volume for separating the gaseous portion from the liquid portion.

## Description

### Field of the invention

The present invention relates to a method for re-use of liquid or supercritical carbon dioxide from a carbon dioxide processing fluid, the carbon dioxide processing fluid comprising carbon dioxide and at least one air component. Moreover, the present invention relates to a high-pressure carbon dioxide based processing system arranged for re-use of liquid or supercritical carbon dioxide from a carbon dioxide processing fluid.

### Prior art

When textile is dyed in supercritical carbon dioxide (scCO₂), the textile is placed in a high pressure vessel after which the vessel is closed and pressurized with the carbon dioxide (CO₂). During this operation, air is trapped in the system. Due to recycling of the carbon dioxide, air (mainly oxygen and nitrogen) is accumulating in this process. As part of the recycling of the carbon dioxide, the carbon dioxide is liquefied by cooling in a condenser.

Due to the increasing amount of air in the mixture with carbon dioxide, the vapor-liquid equilibrium occurs at higher pressures compared to the vapor-liquid equilibrium pressure of pure carbon dioxide. With each dye cycle, the amount of air increases, which can ultimately result in an overpressure in the process and undesirable changes in physical properties of the CO₂ - air mixture.

The current processes of scCO₂ textile dyeing are arranged to purge the dye vessel with pure carbon dioxide after filling with the textile in order to remove the air from the vessel before pressurizing it. Another existing option is venting the gaseous portion phase directly from the condenser to remove air from the system. However, purging the dye vessel costs a lot of CO₂ and increases the time to perform a dyeing cycle. Venting the gaseous phase directly from the condenser also results in large CO₂ losses, because of the relative low level of air in the vented gaseous portion.

Many other processes using liquid or supercritical carbon dioxide in which the carbon dioxide is recycled have the same problem. Examples of such processes are extraction, impregnation, vegetable drying, textile cleaning, parts cleaning, and particles formation processes. In principle each process, in which a vessel needs to be depressurized and opened to fill and/or empty its contents followed by pressurization with carbon dioxide, thereby trapping air in the vessel during such operation, suffers from the above problem when the carbon dioxide is recycled.

Typically, with some particle processes using pressurized carbon dioxide, a high pressure vessel is filled with CO₂ at a certain temperature and pressure. A liquid or suspension is injected into the vessel. Afterwards the vessel or another vessel in the same equipment is depressurized and opened to collect the product. Upon closing to continue collecting particles, air is trapped.

Typically, in other high pressure CO₂ based processes, a high pressure vessel is loaded with the starting materials and the vessel is tightly closed. CO₂ is injected into the vessel and subsequent processing of the starting materials with CO₂ starts. Afterwards, the pressure is released and CO₂ is recycled. The residual materials or products are removed from the vessel.

In the prior art, the accumulation of air gases in these carbon dioxide based systems causes the vapor liquid equilibrium of the mixture to shift to higher pressures, which reduces the efficiency of these systems and is therefore undesirable.

EP1405662 according to its abstract describes "A carbon dioxide recovery apparatus (1) and process for supercritical extraction includes providing a process stream (61) from a supercritical extraction procedure (60) in which the process stream (61) includes pressurized carbon dioxide, extraction process waste and optionally at least one co-solvent; reducing the pressure of the process stream below critical pressure; venting low pressure carbon dioxide vapor (66) to exhaust; cooling the process stream to form a two phase mixture; separating the two phase mixture into a process liquid (71), containing co-solvent if present, and a process vapor phase stream (72); collecting the process liquid; filtering the process vapor phase stream (72) to remove particulates and optionally residual co-solvent; passing the filtered process vapor stream (81) through an adsorber (85) to remove trace impurities to form a purified carbon dioxide vapor stream (90); and, drying the purified carbon dioxide vapor stream (90) to remove residual water vapor. Carbon dioxide recovery process for supercritical extraction involves providing a process stream from a supercritical extraction procedure, reducing the pressure of the process stream below critical pressure, venting carbon dioxide vapor to exhaust, cooling the process stream, separating the two phase mixture into a process liquid, passing filtered process vapor phase stream through an adsorber, and drying purified carbon dioxide vapor stream. Carbon dioxide recovery process for supercritical extraction comprises providing a process stream (61) including pressurized carbon dioxide, extraction process waste, and optionally at least one co-solvent, from a supercritical extraction procedure (60); reducing the pressure of the process stream below critical pressure; venting low pressure carbon dioxide vapor (66) to exhaust; cooling the process stream to form a two phase mixture; separating the two phase mixture into a process liquid (71), containing co-solvent and a process vapor phase stream (72); collecting the process liquid; filtering the process vapor phase stream to remove particulates and optionally residual co-solvent; passing the filtered process vapor stream (81) through an adsorber (85) to remove trace impurities to form a purified carbon dioxide vapor stream; and drying the purified carbon dioxide vapor stream (90) to remove residual water vapor."

EP2098307 according to its abstract describes: "The invention relates to a method and a system for cleaning articles in a treatment fluid (3) comprising a densified gas, said system comprising a cleaning chamber, a primary still (1) for distilling said treatment fluid (3) and a secondary still (6) for distilling treatment fluid (3) withdrawn from the primary still."

WO0168278 according to its abstract describes: "The invention relates to a method and a device for cleaning objects, especially textiles, by means of liquefied gas acting as the cleaning fluid. The gas is stored in a storage container (1) under pressure and the liquefied gas is supplied to a cleaning chamber (5). According to the invention, a working container (2) which is connected to the storage container (1) and the cleaning chamber (5) is provided. The liquefied gas is transported from the storage container (1) via the working container (2) to the cleaning chamber (5) without pump and compressor and using the pressure difference. In a preferred embodiment, the pressure in the storage container (1) and in the working container (2) is selected in such a way that said pressure is at least 7 to 30 bar higher than in the cleaning chamber (5). The gas which is present in the gas phase in the top area of the working container (2) can at least partially be removed or allowed to escape from the working container (2), by means of an O2-measuring device (7) and a blow-out valve (10) for instance, when there is a certain concentration of foreign gases, especially air gases, or of the cleaning fluid in the gas phase in the top area of the working container (2). In addition, the liquefied gas can be distilled (3) and/or filtered (4)."

### Summary

It is an object of the present invention to provide a method and system that overcome or mitigate the disadvantages of the prior art. The aim of the invention is to provide an efficient removal of air or possibly air with other components that have a supercritical temperature lower than that of carbon dioxide such as nitrogen or oxygen from a mixture comprising pressurized carbon dioxide, which accumulates in systems in which liquid or supercritical carbon dioxide is recycled or re-used.

The object is achieved by a method for removal of gaseous contaminants from a carbon dioxide processing fluid, the gaseous contaminants comprising at least one air component, the method comprising:
- providing a processing system having a main volume and a condenser volume and bringing the main volume and condenser volume in fluid communication;
- maintaining in the main volume and the condenser volume the carbon dioxide processing fluid at a process pressure and a process temperature, the process pressure and process temperature corresponding to one selected from a liquid state and a supercritical state for carbon dioxide;
- cooling the carbon dioxide processing fluid in the condenser volume to a second temperature, wherein the second temperature is lower than the process temperature, resulting in a carbon dioxide enriched liquid portion and a gaseous portion enriched with the at least one air component in the condenser volume;
- venting the gaseous portion as a vented gas flow from the condenser volume for separating the gaseous portion from the liquid portion.

Advantageously, the method provides that the carbon dioxide processing fluid can be recycled in a relative simple manner, while the high pressure system is filled with high pressure carbon dioxide, i.e., in principle also during normal operation. Further, since the method allows to recycle the carbon dioxide during operation, the composition of the carbon dioxide processing fluid can be maintained at a substantially constant level or at low level of air contaminants. Operating conditions will therefore be more stabile over time, which provides a better repeatability of processing.

Also, the method provides a relatively efficient separation of the air component(s) from the carbon dioxide processing fluid without the need for full distillation of the liquid carbon dioxide processing fluid. In comparison, the processing time for removal of the air component(s) is reduced.

It should be noted that the current system can be applied for removal of one or more component from a processing fluid, which component has a supercritical temperature lower than that of the processing fluid.

The main volume comprises for instance the volume of pumps, vessels, the volume valves, fluid storage, tubing, instrumentation, and coolers and/or heaters which are in fluid coupling with one another. In fact, it relates to a volume of the processing apparatus comprising a headspace or other space where gaseous fluid can build up. The volume of the main volume can be relatively large in comparison to the volume of the system for processing using this fluid, for instance a storage for processing fluid.

In the main volume processing fluid is used, for example for textile dyeing or cleaning. For instance, carbon dioxide processing fluid is typically in a liquid or supercritical state, by selecting an appropriate process pressure P and a process temperature T1 for the carbon dioxide fluid in the main volume.

In the main volume, during use of the system, objects or material to be processed can be transferred in and out of the system and while the system may have a purge option, still for instance air may become trapped in the system. Thus the processing fluid which was initially pure, may become mixed with components, for instance air components, like oxygen and nitrogen, during use of the system.

In an embodiment, the method further comprises:
- collecting the liquid portion in the condenser volume and
- draining the collected liquid portion to the main volume.

In an embodiment, the method further comprises:
- transferring the collected liquid portion to a secondary volume before draining it to the main volume.

In an embodiment, the method further comprising:
measuring a parameter indicative of a ratio of carbon dioxide and an air level component and controlling the venting of the gaseous portion based on the measured parameter, in particular measuring a parameter selected from an air component level, a carbon dioxide level, and a combination thereof in the gaseous portion, and
controlling the venting of the gaseous portion based on the measured level.

In an embodiment, a flow rate of the vented gas flow is controlled.

In an embodiment, the venting of the gaseous portion is blocked if a measured level of a process pressure and a second temperature in the condenser volume corresponds, under equilibrium conditions, to a mass ratio of liquid to vapor (L/V ratio) having a value of ten or higher, in particular the venting is stopped when a cooling power is insufficient for keeping contents of the condenser volume at a set point which is correlated to the L/V ratio, in an embodiment a flow through the needle valve is constant, providing a cooling power that correlates to an amount of CO₂ that condenses.

In an embodiment, the venting of the gaseous portion is blocked if the measured level at the process pressure and the second temperature corresponds, under equilibrium conditions, to a mass ratio of liquid to vapor having a value of five or higher.

In an embodiment, the pressure in the main volume is selected between about 25 atm. and about 75 atm., in particular between about 35 atm. and about 65 atm.

In an embodiment, the temperature in the main volume is selected between about -10 and about 30 °C, in particular between about zero and about 20 °C.

In an embodiment, the second temperature is selected between about -56 and about 10 °C, in particular between about -45 and about 0 °C, more in particular between about -30 and about -10 °C.

Further the present invention relates to a high pressure carbon dioxide based system carbon dioxide processing fluid based processing system for executing the method, comprising:
- a main volume for holding a volume of carbon dioxide at a set pressure and set temperature, said main volume comprising a head space for holding a head volume of gas evaporated from said carbon dioxide;
- a condenser volume for containing a volume of gas, which volume of said condenser volume is at least 10 times smaller than said volume of said main volume, said condenser volume and said head space connectable in fluid communication with one another, the condenser volume further comprising a heat exchanger, a first outlet for venting gas from said condenser volume, and a second outlet for draining a liquid from said condenser volume to said main volume;
wherein said heat exchanger in operation is set for cooling the gas in the condenser volume to a second temperature lower than the temperature in the main volume,
wherein the pressure and the temperature in the main volume and the second temperature are set to provide a carbon dioxide enriched liquid portion and a gaseous portion enriched with the at least one air component in the condenser;
wherein the processing system is operable for removal of gaseous contaminants from the carbon dioxide processing fluid, the gaseous contaminants comprising at least one air component.

In an embodiment, the processing system further comprises an exhaust line in fluid communication with said first outlet and comprising pressure reducer, in particular selected from a venting valve and a nozzle.

In an embodiment, the second outlet is fluid coupleable to the main volume via a conduit, for discharging condensed carbon dioxide from said condenser volume to said main volume, in particular said conduit discharging remote from said head space.

In an embodiment, the condenser volume is positioned above the main volume, in particular above the head space for draining the liquid portion by gravity.

In an embodiment, the second outlet is in fluid communication with a secondary volume for receiving the carbon dioxide enriched liquid portion, and the secondary volume is in fluid communication with the main volume for transfer of the liquid portion to the main volume.

In an embodiment, the processing system further comprises:
- a sensing device arranged for measuring a parameter indicative of a ratio of carbon dioxide and at least one air component, in particular for measuring at least one parameter selected from a level of at least one air component not being carbon dioxide, carbon dioxide concentration in the gaseous portion in the condenser volume and a combination thereof, and
- a controlling device functionally coupled to said sensing device for receiving said parameter and for controlling a flow through said the first outlet based on the measured level.

In an embodiment, the processing system further comprises a metering valve closing said first outlet and functionally coupled to said controlling device for controlling a flow rate of the vented gas flow, in particular wherein the controlling device is set to close said metering valve for blocking the venting of the gaseous portion if the measured level of the process pressure and the second temperature at the condenser volume corresponds, under equilibrium conditions, to a mass ratio of liquid to vapor having a value of ten or higher, in particular to a value of five or higher.

In an embodiment, the processing system is selected from a group comprising a carbon dioxide based textile dyer system, a carbon dioxide based extraction system, a carbon dioxide based vegetable drying system, a carbon dioxide based textile cleaning system, carbon dioxide based parts cleaning system, and a particle formation system in which the particles are formed in a vessel at pressures and temperatures at which pure CO₂ has a density above 400 kg/m3.

There is further provided a process for re-use of liquid or supercritical carbon dioxide from a carbon dioxide processing fluid, the carbon dioxide processing fluid comprising carbon dioxide and at least one air component, using a carbon dioxide processing fluid in a processing system in accordance with the processing system.

There is further provided the use of the carbon dioxide processing fluid based system.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### Brief description of drawings

The invention will be explained in more detail with reference to drawings in which illustrative embodiments of the invention are shown. The drawings are intended for illustration purposes only without limitation of the scope of protection which is defined by the subject matter of the appended claims.
Figure 1 shows a schematic layout of a system according to an embodiment of the invention;
Figure 2 shows a schematic layout of a system according to an embodiment of the invention.

### Description of embodiments

Below embodiments of the system are illustrated with reference to the drawings. In the description below, the same reference numerals refer to similar or identical components in each of the figures.

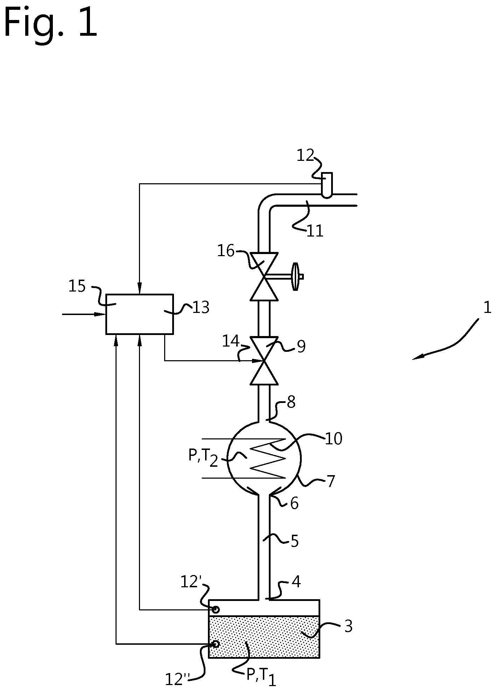

Figure 1 shows a schematic layout of a processing system according to an embodiment of the system.

The system 1 is a processing system for processing objects or substances which uses a processing fluid, for instance carbon dioxide processing fluid.

The system 1 typically comprises a main volume 3 in which the objects or substances are exposed to the carbon dioxide processing fluid. In an embodiment, the main volume comprises pumps, vessels, valves, CO₂ storage, tubing, instrumentation, and coolers and/or heaters. In fact, it relates to a volume of processing apparatus comprising a headspace or other space where gaseous fluid can build up. In general, such a volume of a main volume of the processing system 1 is relatively large in comparison to a volume of a system for processing of the fluid.

In the main volume 3 for instance a carbon dioxide based processing fluid is used, for example for textile dyeing or cleaning. Such a processing fluid is typically in a liquid or supercritical state, by selecting an appropriate process pressure P and a process temperature T1 for the carbon dioxide fluid in the main volume 3.

During use of the processing system 1, objects (not shown) or material are transferred in and out of the processing system 1. The processing system 1 may have a purge option, but despite that, impurities or contaminations, like for instance air, may become trapped in the processing system 1. Thus for instance the carbon dioxide processing fluid which was initially pure, may become mixed with air components like oxygen and nitrogen during use of the processing system 1.

In that example, due to the increasing amount of air in the carbon dioxide processing fluid, i.e. the mixture of air component(s) and carbon dioxide, the vapor-liquid equilibrium shifts to higher pressure compared to the vapor-liquid equilibrium pressure of pure carbon dioxide. Just to indicate the effect: without air, liquid CO₂ has a vapor pressure of 45 bar at 15°C. In case 2 wt% of (the air component) nitrogen is dissolved in the liquid carbon dioxide, the vapor pressure increases to 55 bar. In case 4 wt% of (the air component) nitrogen is dissolved in the liquid carbon dioxide at 15°C, the vapor pressure already increases to 69 bar. Thus, with each cycle that exposes the internals of the processing system to air, the amount of air in the carbon dioxide processing fluid may increase, which can ultimately result in an overpressure in the process carried out in the processing system 1.

Typical operating values for the processing system 1 using a processing fluid consisting (largely) of a vapor-liquid mixture of carbon dioxide with air components would be a temperature T1 between about -10 and 30°C and the resulting vapor pressure as a result of the mixture. Preferably, the temperature T1 is between 0°C and 20°C.

In this example, the processing system 1 is adapted for recycling of the carbon dioxide processing fluid and for removal of gaseous contaminants from the carbon dioxide processing fluid, the gaseous contaminants comprising at least one air component. Usually, this would include nitrogen and oxygen as main gaseous contaminants.

The main components of the processing system 1 are depicted in figure 1. The processing system 1 comprises main volume 3, conduit 5, condenser volume 7, venting valve 9 and an exhaust line 11. This main volume 3 in an embodiment is the CO₂ storage and/or a condenser of the CO₂ equipment. Often, the volume of the CO₂ storage is much larger than the remaining volume of the processing system 1.

The main volume 3 is in fluid communication with the condenser volume 7 by the conduit 5 that interconnects an outlet 4 of the main volume 3 and an inlet 6 of the condenser volume 7.

The condenser volume 7 comprises an outlet 8 which connects to an exhaust line 11, which is arranged with a closeable valve 9 that allows venting of the condenser volume 7.

In an embodiment, the processing system 1 is equipped with a pumping device or pressure regulator (not shown) to generate the process pressure P in the main volume 3. Further, the system is equipped with a first heater, for instance in an embodiment a heat pump (not shown) to set the process temperature T1 in the main volume 3.

The conduit 5 provides a passage between the main volume 3 and the condenser volume 7 to allow the CO₂ processing fluid, i.e., its vapor phase which is a mixture of carbon dioxide vapor and the (contamining) air component, to flow into the condenser volume 7.

In the condenser volume 7 the carbon dioxide fluid is under the same process pressure P as in the main volume 3.

The condenser volume 7 comprises a second cooler 10 for setting a second temperature T2 in the condenser volume 7. During use, the second temperature T2 is lower than the process temperature T1.

Typically, the condenser volume 7 comprises a heat exchanger surface 10 at the second temperature T2.

According to the invention, inside the condenser volume 7 the carbon dioxide processing fluid is in contact with the heat exchanger surface 10 and cools down to substantially the second temperature T2 which is set lower than the operating temperature T1 (which T1 could correspond to the vapor-liquid equilibrium temperature for carbon dioxide at the given process pressure P).

The second temperature T2 is selected to cause a separation of the carbon dioxide processing fluid into a carbon dioxide enriched liquid fraction or portion L and a gaseous portion V enriched with the air components. This at the set pressure P defined earlier.

In an embodiment, the second heat exchanging surface 10 of the condenser volume 7 is capable of cooling the vapor mixture to a temperature T2 between -56 °C and 10 °C, more specifically 0 °C to -45 °C, more specifically between -10 °C and -30 °C. The temperature T2 is selected to create the carbon dioxide enriched liquid phase L and the air enriched gaseous or vapor phase V. For instance, when a CO₂ storage tank as main volume is kept at a temperature T1 of 0°C and a pressure P of 50 bar, and the condenser volume 7 (in fact providing here an air scrubber) is cooling to a temperature T2 of -10°C, the L/V ratio is 0,9 (26wt% air in vapour phase). If the CO₂ storage tank is kept at 60 bar, the L/V ratio drops even further to 0,6 (32wt% air in vapour phase).

When the temperature T2 of the airscrubber is set to -30°, the L/V ratio is 17 (at 50 bar) and the L/V ratio is 10 (at 60 bar). Although the L/V ratio is high, the wt% of air in the vapour phase is also higher (51wt% at 50bar compared to 54% at 60 bar).

The carbon dioxide enriched liquid portion L will be collected at a lower location in the condenser volume 7 using the force of gravity, and can be removed/drained from the condenser volume 7 which will be explained in more detail below. Usually, the volume of the main volume is much larger than the volume of the condenser volume 7. For instance, the volume of the main volume can be at least 2 m³, and the volume of the condenser is smaller than 10 liter.

By removal of the carbon dioxide enriched liquid portion L from the condenser volume 7, the gaseous portion V remaining in the condenser volume 7 becomes relatively enriched with the air component(s).

The venting valve 9 can be opened to vent the gaseous portion V enriched with air components from the condenser volume 7 into the exhaust line 11. By removal of the gaseous portion enriched with air components, the fluid that remains in the system becomes comparatively enriched with carbon dioxide, i.e., becomes purified.

The venting valve 9 may contain an arrangement of one or more valves and/or can contain a nozzle.

The venting valve 9 may be arranged for manual operation or for automated operation.

In an embodiment, the processing system 1 comprises a sensing device 12 that can provide a measurement value to a controller 13 that is indicative of for instance a ratio of air to carbon dioxide. For instance, the sensing device 12 can provide a level of the at least one air component in the gaseous portion V, or alternatively a level of the carbon dioxide in the gaseous portion. Such a sensing device 12 may be positioned in the condenser volume 7 or in the exhaust line. Alternatively, sensing device 12' can provide temperature and/or sensing device 12" can provide pressure.

In this manner, the processing system 1 can provide the possibility to observe the rate of enrichment of the gaseous portion during the exposure of the carbon dioxide processing fluid in the condenser volume 7 to the second temperature T2. Based on the measured level, the venting valve 9 may be opened to vent the gaseous phase V when the measured level is above a threshold or closed to block the venting from the condenser volume 7, when the measured level is below the threshold.

In a further embodiment the system 1 is equipped with a controlling device 13 arranged for controlling the venting valve 9 based on the measured level. The controlling device 13 is coupled to the sensing device 12 or 12' or 12" for receiving a sensor signal that relates to the measured level of air or carbon dioxide or is indicative of a ratio of air to carbon dioxide. Also, the controlling device 13 is coupled to an actuator 14 of the venting valve 9 which is arranged for opening and closing the valve. Based on the received sensor signal value, the controlling device 13 can control the venting valve 9 to open or close by means of the actuator 14.

In an embodiment, the controlling device 13 compares the received sensor signal value to a reference signal 15 or threshold, to determine if the venting valve should open to release the gaseous portion V enriched with air components from the condenser volume 7.

Likewise, the controlling device 13 is arranged to control the venting valve 9 to close when the measured level indicates that the carbon dioxide fluid is sufficiently pure to use, i.e., the amount of air components is below a threshold.

The venting of the gaseous portion may be blocked when the level of air in the system 1 (main volume 3 and condenser volume 7) is such that under the conditions of pressure P and second temperature T2 in the condenser volume 7, all vapor entering from the main volume condenses. There may still be air dissolved in the liquid CO₂, however, the amount is very low.

According to an aspect of the invention, the venting of the gaseous portion is blocked if the measured level at the process pressure P and the second temperature T2 corresponds, under equilibrium conditions, to a mass ratio of liquid L to vapor (gaseous portion) V having a value of five or higher (L/V ≥ 5). In a preferred embodiment, the venting of the gaseous portion is blocked if L/V ≥ 10.

In an embodiment, the exhaust line 11 is provided with a manual or automatic control valve 16 to control the flow rate of the gaseous portion vented from the condenser volume 7.

The liquefied carbon dioxide portion L created in the condenser volume 7 will be collected by gravity, i.e., the liquid will drip from the cooling surface 10 to a lower collecting area in the condenser volume 7.

In the embodiment of figure 1, the condenser volume 7 has an outlet of that lower area that discharges into the conduit 5. Thus the conduit 5 functions as both an inlet for vapor phase carbon dioxide processing fluid into the condenser volume and outlet for carbon dioxide liquid to the main volume. In the conduit 5 the flow of liquid is in counter flow with the vapor phase carbon dioxide processing fluid.

In a further embodiment, the conduit 5 may be arranged with a large contacting surface where the liquid and the vapor in their counter flow can exchange heat, and possibly liquefy a part of the carbon dioxide component in the vapor phase.

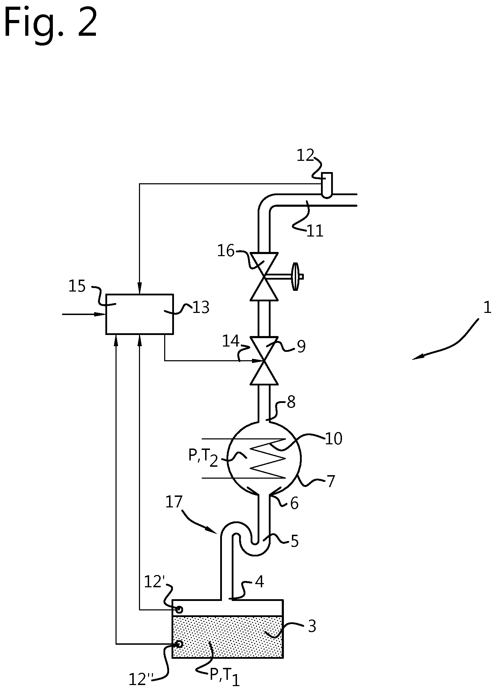

Figure 2 shows a schematic layout of a system according to a further embodiment of the current system. In Figure 2 entities with the same reference number as shown in the preceding figure refer to identical or similar entities. Natural convection of the gas may occur in some cases. The connection downward may be equipped with a liquid lock provision, for instance a deep seal trap17 as indicated in the drawing.

To that end, in the embodiment of figure 2 the condenser volume 7 can have a second, lower, outlet for liquefied carbon dioxide fluid that discharges in a secondary volume. The secondary volume can function as a storage volume where the carbon dioxide fluid is stored before entering the main volume 3. The secondary volume is coupled with the main volume for transfer of the carbon dioxide fluid.

In another embodiment a different return flow line for condensed liquid can be provided.

In figure 2, a deep seal trap 17 is provided between the main volume 3 and the condenser volume 7. In an embodiment, a deep seal trap 17 has an upper bent downstream towards the condenser volume 7 and a lower bent upstream towards the main volume 3. In the lower bent in operation liquid fluid collects, preventing backflow of gas.

In a further embodiment, a further conduit is provided that fluidly coupled the main volume 3, on particular the head space, and the condenser volume 7. In an embodiment, this further conduit comprises a bent above the condenser volume 7 for providing a gas trap, preventing a back flow of gas when a pressure in the condenser volume 7 is higher than a pressure in the mean volume 3 (or its head space).

In fact, such a provision may also be provided using a first and second conduit, both fluidly coupling said condenser volume 7 and said main volume 3. The first and second conduit are each provided with a valve or a check valve. The first conduit allowing liquid to flow from the condenser volume 7 into the main volume 3 but blocking a flow of gas from the main volume 3 to the condenser volume 7. The second conduit allows gas to flow from the main volume 3 to the condenser volume 7 if the pressure of gas in the main volume 3 is higher than the pressure of gas in the condenser volume 7, but blocks gas to flow from the condenser volume 7 to the main volume 3 if the pressure of gas in the condenser volume 7 is higher than the pressure of gas in the main volume 3. There is in general provided a first flow path and a second flow path having these provisions.

The condenser volume 7 with heat exchanger 10 and valve in fact in an embodiment provide an air scrubber coupled to a head space.

The invention has been described with reference to the preferred embodiment. Obvious modifications and alterations will occur to others upon reading and understanding the preceding detailed description. It is intended that the invention be construed as including all such modifications and alterations insofar as they come within the scope of the appended claims.

## Claims

1. A method for removal of gaseous contaminants from a carbon dioxide processing fluid, the gaseous contaminants comprising at least one air component,
the method comprising:
- providing a processing system having a main volume and a condenser volume and bringing the main volume and condenser volume in fluid communication;
- maintaining in the main volume and the condenser volume the carbon dioxide processing fluid at a process pressure and a process temperature, the process pressure and process temperature corresponding to one selected from a liquid state and a supercritical state for carbon dioxide;
- cooling the carbon dioxide processing fluid in the condenser volume to a second temperature, wherein the second temperature is lower than the process temperature, resulting in a carbon dioxide enriched liquid portion and a gaseous portion enriched with the at least one air component in the condenser volume;
- venting the gaseous portion as a vented gas flow from the condenser volume for separating the gaseous portion from the liquid portion.

2. The method according to claim 1, further comprising:
- collecting the liquid portion in the condenser volume and
- draining the collected liquid portion to the main volume,
in an embodiment further comprising:
- transferring the collected liquid portion to a secondary volume before draining it to the main volume.

3. The method according to any one of the preceding claims, further comprising:
measuring a parameter indicative of a ratio of carbon dioxide and an air level component and controlling the venting of the gaseous portion based on the measured parameter, in particular measuring a parameter selected from an air component level, a carbon dioxide level, and a combination thereof in the gaseous portion, and
controlling the venting of the gaseous portion based on the measured level.

4. The method according to any one of the preceding claims, wherein a flow rate of the vented gas flow is controlled, in an embodiment the venting of the gaseous portion is blocked if a measured level of a process pressure and a second temperature in the condenser volume corresponds, under equilibrium conditions, to a mass ratio of liquid to vapor (L/V ratio) having a value of ten or higher, in particular the venting is stopped when a cooling power is insufficient for keeping contents of the condenser volume at a set point which is correlated to the L/V ratio, in an embodiment a flow through the needle valve is constant, providing a cooling power that correlates to an amount of CO₂ that condenses, in an embodiment the venting of the gaseous portion is blocked if the measured level at the process pressure and the second temperature corresponds, under equilibrium conditions, to a mass ratio of liquid to vapor having a value of five or higher.

5. The method according to any one of the preceding claims, wherein the pressure in the main volume is selected between about 25 atm. and about 75 atm., in particular between about 35 atm. and about 65 atm.

6. The method according to any one of the preceding claims, wherein the temperature in the main volume is selected between about -10 and about 30 °C, in particular between about zero and about 20 °C, and/or wherein the second temperature is selected between about -56 and about 10 °C, in particular between about -45 and about 0 °C, more in particular between about -30 and about -10 °C.

7. A carbon dioxide processing fluid based processing system for executing the method of any of the preceding claims, comprising:
- a main volume for holding a volume of carbon dioxide at a set pressure and set temperature, said main volume comprising a head space for holding a head volume of gas evaporated from said carbon dioxide;
- a condenser volume for containing a volume of gas, which volume of said condenser volume is at least 10 times smaller than said volume of said main volume, said condenser volume and said head space connectable in fluid communication with one another, the condenser volume further comprising a heat exchanger, a first outlet for venting gas from said condenser volume, and a second outlet for draining a liquid from said condenser volume to said main volume;
wherein said heat exchanger in operation is set for cooling the gas in the condenser volume to a second temperature lower than the temperature in the main volume,
wherein the pressure and the temperature in the main volume and the second temperature are set to provide a carbon dioxide enriched liquid portion and a gaseous portion enriched with the at least one air component in the condenser; wherein the processing system is operable for removal of gaseous contaminants from the carbon dioxide processing fluid, the gaseous contaminants comprising at least one air component.

8. The processing system of claim 7, further comprising an exhaust line in fluid communication with said first outlet and comprising pressure reducer, in particular selected from a venting valve and a nozzle.

9. The processing system of claim 7 or 8, wherein said second outlet is fluid coupleable to the main volume via a conduit, for discharging condensed carbon dioxide from said condenser volume to said main volume, in particular said conduit discharging remote from said head space.

10. The processing system according to any one of the preceding claims 7 - 8, wherein the condenser volume is positioned above the main volume, in particular above the head space for draining the liquid portion by gravity.

11. The processing system according to claim 7, wherein the second outlet is in fluid communication with a secondary volume for receiving the carbon dioxide enriched liquid portion, and the secondary volume is in fluid communication with the main volume for transfer of the liquid portion to the main volume.

12. The processing system according to claim 7, further comprising:
- a sensing device arranged for measuring a parameter indicative of a ratio of carbon dioxide and at least one air component, in particular for measuring at least one parameter selected from a level of at least one air component not being carbon dioxide, carbon dioxide concentration in the gaseous portion in the condenser volume and a combination thereof, and
- a controlling device functionally coupled to said sensing device for receiving said parameter and for controlling a flow through said the first outlet based on the measured level,
or further comprising:
a metering valve closing said first outlet and functionally coupled to said controlling device for controlling a flow rate of the vented gas flow, in particular wherein the controlling device is set to close said metering valve for blocking the venting of the gaseous portion if the measured level of the process pressure and the second temperature at the condenser volume corresponds, under equilibrium conditions, to a mass ratio of liquid to vapor having a value of ten or higher, in particular to a value of five or higher.

13. The processing system according to any one of the preceding claims 7 - 12, selected from a group comprising a carbon dioxide based textile dyer system, a carbon dioxide based extraction system, a carbon dioxide based vegetable drying system, a carbon dioxide based textile cleaning system, carbon dioxide based parts cleaning system, and a particle formation system in which the particles are formed in a vessel at pressures and temperatures at which pure CO₂ has a density above 400 kg/m3.

14. A process for re-use of liquid or supercritical carbon dioxide from a carbon dioxide processing fluid, the carbon dioxide processing fluid comprising carbon dioxide and at least one air component, using a carbon dioxide processing fluid in a processing system in accordance with any one of the preceding claims 7 - 13.

15. Use of a carbon dioxide processing fluid based system according to any one of the preceding claims 7 - 13.
